# EUROPEAN PATENT APPLICATION

(11) **EP 4 772 081 A2**
(43) Date of publication of application: **08.07.2026**
(21) Application number: 26170737.6
(22) Date of filing: 14.12.2022
(51) Int. Cl.: A47J 31/36

(54) **MACHINE FOR PREPARING AND EXTRACTING A HOT BEVERAGE**

(30) Priority: 17.12.2021 IT 202100031655
(62) Divisional of application: 22840818.3
(71) Applicant: Gise Caffé S.r.l., 40041 Gaggio Montano (IT)
(72) Inventor: ACCURSI, Giovanni, 40046 Alto Reno Terme (Bologna) (IT)
(74) Representative: Bianciardi, Ezio

(57) **Abstract**

Described is a machine for preparing and extracting a hot beverage from a capsule (1) comprising a first fixed extraction unit (8) associated with the frame (6) and comprising a matching housing (9) for the capsule (1) and means (10) for perforating the capsule (1) and passage of the liquid mixture, to extract the beverage; a second movable extraction unit (11), positioned in the frame (6), and movable inside the frame (6) to bring a capsule (1) into the housing (9) of the first fixed unit (8) for extracting the liquid mixture by feeding a pressurised hot fluid into the capsule (1); the means (10) for perforating and passage of the mixture comprise a perforating punch (12), positioned fixed at a bottom (9a) of the housing (9), and partly protruding from the bottom (9a); the punch (12) comprises a first apical portion (12a) configured to intercept and perforate a wall (3) of the capsule (1) at a deformation of the wall (3) of the capsule (1), due to the effect of the pressurised fluid, towards the bottom (9a) of the housing (9) and a second base portion (12b) having a bridge-shaped cross-section defining an opening (13) passing towards a channel (14) or chamber, positioned below the punch (12), configured for the controlled falling of the beverage coming out of the opening of the wall (3) of the capsule (1) whilst the punch (12) is kept, that is to say, inserted, inside the capsule (1).

## Description

### Technical field

This invention relates to a machine for preparing and extracting a hot beverage.

### Background art

The machine according to the invention is of the type using single capsules, preferably of the single-dose type, from which the hot beverage is extracted (such as coffee, tea, milk, camomile and similar beverages) by extracting the product with pressurised hot fluid.

The capsules used for this type of machine basically comprise a capsule body forming a chamber having a bottom and an opening of the capsule body delimited by an annular collar protruding transversally with respect to the body.

A dose of extraction product is housed in the chamber.

The opening of the capsule is sealed by a piece of film adherent to the annular collar.

The prior art machines using these capsules basically comprise:
- a load-bearing frame having an inlet opening for the capsule;
- a first fixed extraction unit positioned in the load-bearing frame and comprising a housing for the capsule and means for perforating and passage of the mixture, to obtain the extraction of the beverage, positioned on the bottom of the housing;
- a second movable extraction unit, positioned inside the frame, and movable inside the frame along a linear trajectory, in both directions, between a first non-operating end position away from the first fixed extraction unit (wherein the second movable extraction unit is positioned close to the inlet opening), and a second operating end position wherein the second movable extraction unit is moved towards the first fixed extraction unit in such a way as to move the capsule from an inlet position in the frame to a housing position in the first fixed unit for extracting the beverage by feeding a pressurised hot fluid.

Means for supporting the capsule are interposed between the movable extraction unit and the frame.

Usually, these supporting means may comprise a pair of protruding arms, positioned on both sides of the movable extraction unit, configured to retain the capsule entering (by falling) from the opening present on the frame. The pair of arms is configured to move along the frame synchronised with the movable extraction unit.

These arms can move between an operating position, with the ends of the arms positioned at a reciprocal reduced distance, for retaining the capsule (with the extraction unit movable in the first non-operating position), to a non-operating position, wherein the ends of the arms are at a mutual distance greater than the previous distance so as to free the capsule at the housing of the capsule in the fixed dispensing extraction unit (with the movable extraction unit in the second operating position).

The movable extraction unit has a head provided with perforating elements which are able to perforate, according to a first solution, the sheet of film (if the capsule is inserted in the frame with the bottom facing towards the fixed extraction unit) or, according to a second solution, the perforating elements perforate the bottom of the capsule (if the capsule is inserted in the frame in the opposite direction to the previous one).

The head of the movable extraction unit is provided with ducts for the passage of the pressurised hot fluid to be introduced into the capsule after the capsule has been perforated.

The extraction of the beverage occurs by the combination given by the increase in the pressure inside the capsule supplied by the fluid entering and by the presence of the perforating means positioned on the bottom of the housing of the first fixed extraction unit which allow an opening in the capsule to be obtained for the passage of the beverage obtained from the product/fluid mixture towards the dispensing conduits of the extracted beverage made in the first fixed extraction unit.

The perforating means positioned on the bottom of the housing, which are of particular interest in this invention, may comprise, according to a prior art solution: a perforating element positioned close to the bottom of the housing and movable, by suitable movement means, between a withdrawn non-operating position, below the bottom of the housing, and an advanced operating position, protruding from the bottom of the housing, in such a way as to perforate the bottom of the capsule inserted in the housing.

After perforation, the perforating element returns to the withdrawn non-operating position.

At this point, the increase in the pressure inside the capsule is such that the bottom deforms downwards and increases the size of the incision on the bottom. At the same time, the pressurised fluid mixes with the product forming the product to be dispensed which starts to come out of the incision on the bottom and flow into one or more ducts feeding the beverage dispensing nozzle.

One of these solutions of the machine and perforating means is described in patent document WO 2008/014830.

However, this type of structure of the perforating means has drawbacks.

The perforating means needs movable elements in order to be able to make the incision and, therefore, the central part of the bottom zone of the housing cannot be used to correctly make the ducts for feeding the beverage, which must be obtained peripherally with respect to the central opening with risks of a partial loss of quality and quantity of product.

Moreover, the early perforation of the bottom of the capsule may result in incorrect escape of product which has not yet been mixed perfectly with the pressurised fluid.

### Aim of the invention

The aim of this invention is to provide a machine for preparing and extracting a hot beverage that overcomes the above-mentioned drawbacks of the prior art.

In particular, the aim of the invention is to provide a machine for preparing and extracting a hot beverage which is able to correctly guide the escape of the beverage from the capsule base.

A further aim of the invention is to provide a machine for preparing and extracting a hot beverage with an extremely compact perforating unit so as to reduce the overall dimensions of the machine.

Said aims are fully achieved by the machine for preparing and extracting a hot beverage according to the invention as characterised in the appended claims.

### Brief description of the drawings

The main features of the invention will become more apparent from the following detailed description of a preferred, non-limiting embodiment, illustrated purely by way of example in the accompanying drawings, in which:
- Figure 1 is a perspective view, with some parts cut away to better illustrate others, of a machine for preparing and extracting a hot beverage according to the invention;
- Figure 2 is a top plan view of the machine of Figure 1;
- Figure 3 is a side view, with some parts cut away and other parts in cross section, of the a part of the machine of Figure 1;
- Figures 4, 5 and 6 are all plan views from above, with some parts cut away and others in cross section of a part of the machine of the preceding figures, in particular a fixed extraction unit with capsule perforating means, in three different operating configurations for extracting the beverage;
- Figures 7, 8 and 9 are, respectively, a side view, a top plan view and a perspective view of perforating means of the machine of the preceding drawings.

### Detailed description of preferred embodiments of the invention

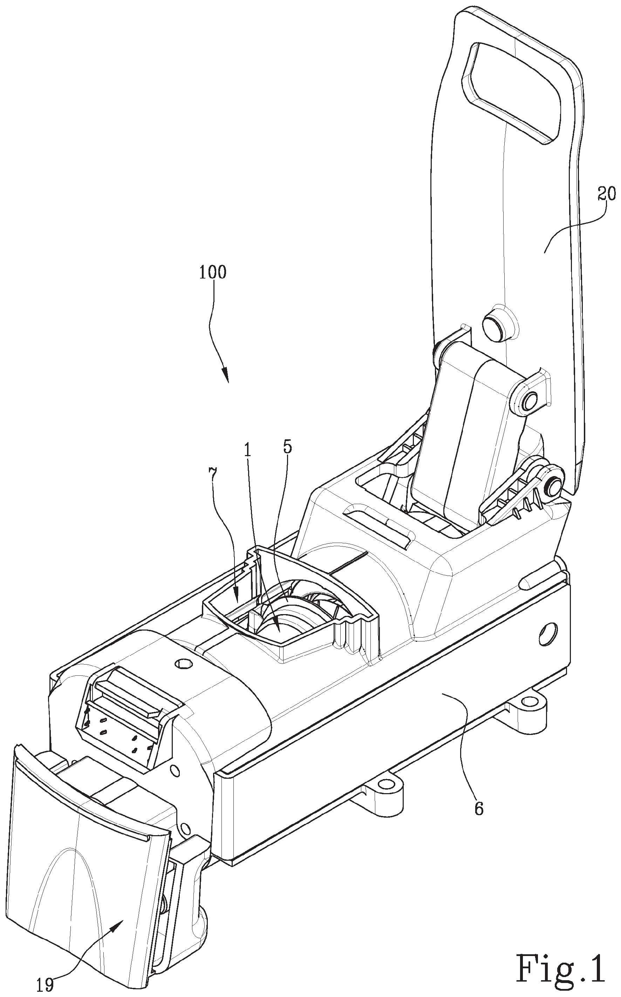

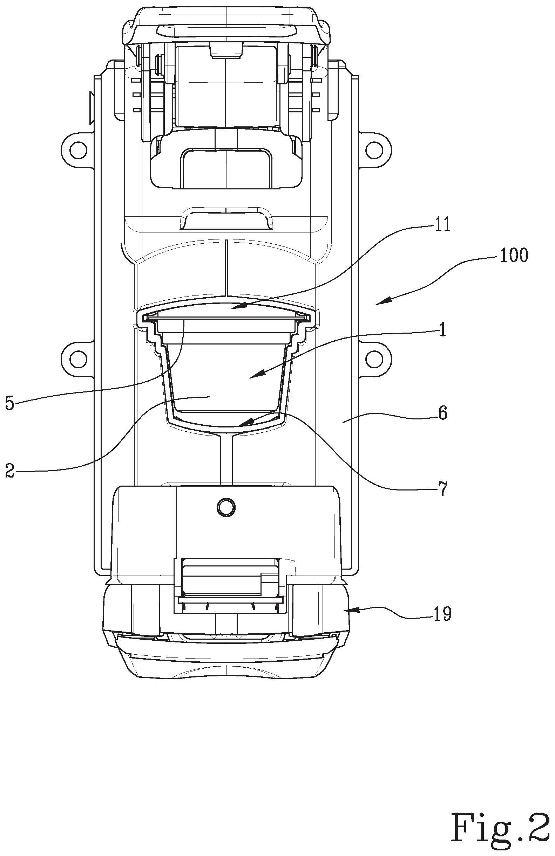

With reference to the accompanying drawings, in particular Figures 1 and 2, the machine according to the invention, labelled 100 in its entirety, is used with single capsules, preferably of the single-dose type, from which the hot beverage is extracted (such as coffee, tea, milk, camomile and similar beverages) by extracting the product with pressurised hot fluid.

The capsule 1 which can be used in the machine 100 basically comprises a capsule body 2, forming a chamber, having a first closed wall 3 or bottom and a second open wall 4 or opening delimited by an annular collar 5 protruding transversely with respect to the capsule body 2.

A sheet for sealing the chamber (not illustrated) is positioned on the second open part 4 and the collar 5.

The chamber houses at least one dose of product.

Figures 1 and 2 illustrate a part of the machine for preparing and extracting a hot beverage from the capsule 1, that is to say, the operating parts of relevance for the invention.

The machine 100 comprises a load-bearing frame 6 having an inlet opening 7 for the capsule 1.

Moreover, the machine 100 comprises a first fixed extraction unit 8 associated with the frame 6 and comprising a matching housing 9 for the capsule 1 and means 10 for perforating and passage of the mixture, to then obtain the extraction of the beverage.

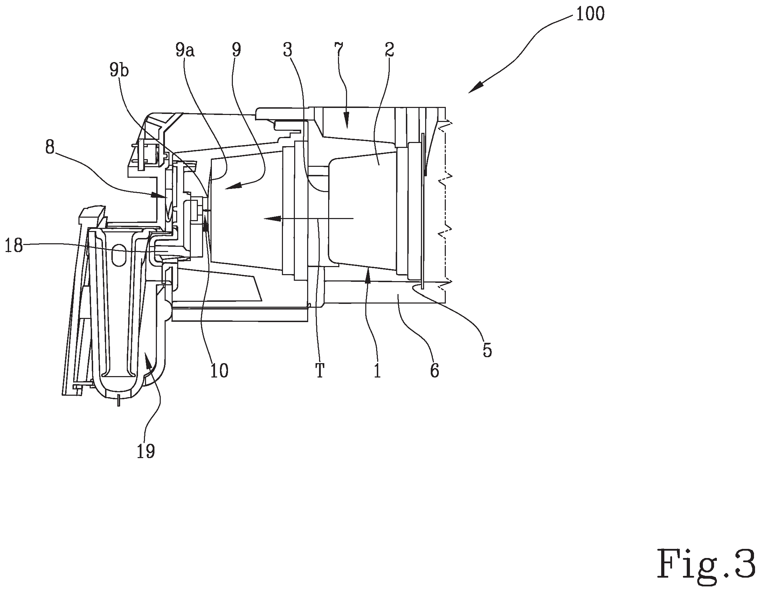

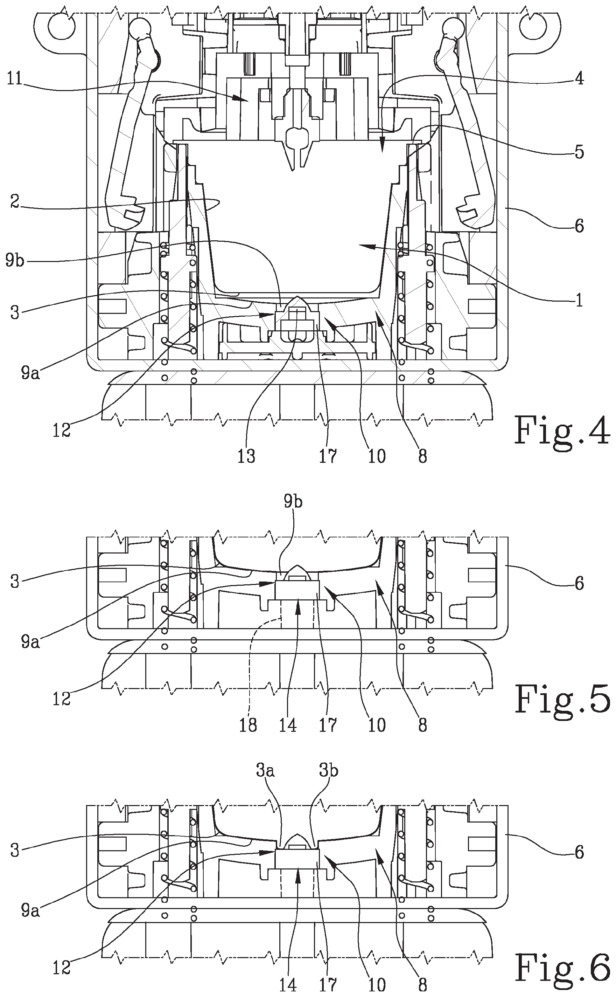

The machine 100 also comprises a second movable extraction unit 11, positioned inside the frame 6, and movable inside the frame 6 along a linear trajectory T, in both directions, between
- a first non-operating end position away from the first fixed extraction unit 8 (Figures 2 and 3), wherein the second movable extraction unit 11 can receive the capsule 2 through the inlet opening 7, and
- a second operating end position (Figures 4-6) wherein the second movable extraction unit 11 is moved towards the first fixed extraction unit 8 in such a way as to move the capsule 1 from an inlet position to a position for insertion in the housing 9 of the first fixed unit 8 for extracting the beverage by feeding a pressurised hot fluid inside the capsule 1.

According to Figures 4 to 6 and 7 to 9, the means 10 for perforating and passage of the mixture comprise a perforating punch 12, positioned fixed at a bottom 9a of the housing 9, and partly protruding from the bottom 9a.

Again as illustrated, the punch 12 comprises a first apical portion 12a configured, in use, to intercept and perforate the first wall 3 of the capsule 1 upon a deformation of the first wall 3 of the capsule 1, by effect of the pressurised fluid, towards the bottom 9a of the housing 9.

The punch 12 has a second base portion 12b having a bridge-shaped cross-section defining an opening 13 passing towards a channel 14 or chamber, positioned below the punch 12, configured for the controlled falling of the liquid mixture coming out from the opening of the wall 3 of the capsule 1 whilst the punch 12 is kept, that is, inserted, inside the capsule 1.

In other words, the perforating means are positioned in a fixed position and use the deformation of the wall of the capsule for cutting the wall of the capsule. Moreover, the same means are configured to remain inside the capsule during the fluid / product mixing and, at the same time, are configured to allow the controlled escape of the mixture through the opening of the punch and the underlying duct.

As illustrated, the channel 14 has two semi-circular portions defined by the overlying punch 12 and configured to contain two lips 3a, 3b of the first wall 3 of the capsule 1, defined by the incision of the punch 12, generated upon the deformation of the capsule 1 by effect of the pressurised fluid, and in such a way as to define a single controlled outlet point of the liquid mixture. (see Figure 6).

More specifically, the punch 12 is partly housed in a cylindrical cavity 9b made in the bottom 9a of the housing defining the upper part of the channel 14 or chamber.

In short, the cylindrical cavity 9b makes it possible to "contain" and guide the burring of the incision made by the punch 12.

As illustrated, the bottom 9a of the housing 9 of the first fixed extraction unit 8 has a profile which is partly rounded and configured to allow a complementary coupling of the wall 3 of the capsule 1 perforated by the punch 12 upon its deformation under the effect of the pressure of the fluid entering.

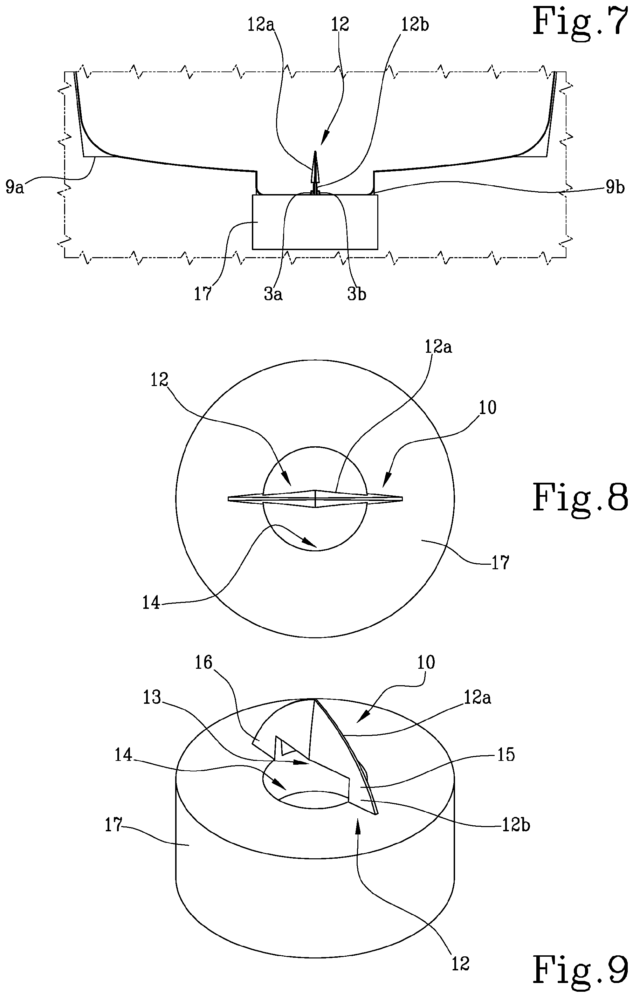

As illustrated in Figures 7 to 9, the punch 12 has a first apical portion 12a having a triangular cross-section with a free vertex oriented away from the bottom 9a of the housing 9 of the first fixed extraction unit 8.

Preferably, but not necessarily, the punch 12 has a triangular shape with rounded outer sides (so as to define spreader elements).

In light of this, the second base portion 12b of the punch 12 has a cross section less than the cross section of the first apical portion 12a, and comprises two end arms 15 and 16 for fixing to the first fixed extraction unit 8.

The opening 13 for the passage of the liquid mixture is formed between the two arms.

It should be noted that the punch 12 is associated with and protruding from a supporting base 17 inserted in the first fixed extraction unit 8.

On the supporting base 17 there is the channel 14 or chamber connected to a conduit 18 for the passage of the liquid mixture towards a dispensing head 19.

In light of this, the supporting base 17 has the open channel 14 with a circular cross-section above which the punch 12 is positioned along a diametric directrix passing through the centre of the circular cross-section of the channel 14 and covering only a part of the channel 14.

As mentioned above, the channel 14, having the two semi-circular portions defined by the overlying punch 12, is configured to contain the two lips 3a, 3b of the first wall 3 of the capsule 1, formed by the incision of the punch 12 and by the deformation of the capsule 1 by effect of the pressurised fluid.

These two lips 3a, 3b, widening and inserting in the cavity 9b, tend to therefore also reach the semi-circular openings of the supporting base 17, due to the effect of the pressure of the fluid, in such a way as to control the outlet flow also thanks to the second open portion 12b of the punch 12 which prevents possible blocking of the flow of the mixture.

The description also provides a method for preparing and extracting a hot beverage from the capsule 1 comprising the capsule body 2 forming a chamber delimited by a first closed wall 3 and a second open wall 4 on which is positioned, for closing, a sheet for sealing the chamber; a dose of product being housed inside the chamber.

The method comprises the following steps:
- inserting the capsule 1 in an inlet opening 7 of the machine 100 and at the second movable extraction unit 11 positioned in a first non-operating end position;
- moving the second movable unit 11 with the capsule 1, along a linear trajectory T, towards a first fixed extraction unit 8 having a matching housing 9 for the capsule 1 and means 10 for perforating and passage of the mixture, to obtain the extraction of the beverage;
- locking the capsule 1 inside the housing 9 without contact between the first closed wall 3 of the capsule 1 and the perforating means 10;
- introducing a pressurised hot fluid through the second wall 4 by perforating its sealing sheet;
- deforming the first wall 3 of the capsule 1 by effect of the pressure of the hot fluid towards a bottom 9a of the housing 9;
- perforating the first deformed wall 3 through a first apical portion 12a of a perforating punch 12, positioned fixed at the bottom 9a of the housing 9,
- outfeed of the liquid mixture at the outlet from an opening of the first wall 3 of the capsule 1 perforated whilst the apical portion 12a of the punch 12 is inserted inside the capsule 1;
- controlled falling of the liquid mixture through a second base portion 12b of the punch 12 having a bridge section defining an opening 13 passing towards a channel 14 or chamber, positioned below the punch 12 to obtain the dispensing of the hot beverage.

It should be noted that at the end of the step of dispensing the hot beverage, that is to say, at the end of the introduction of hot fluid under pressure in the capsule 1, only the apical portion 12a of the punch 12 remains inserted inside the capsule 1, blocking the escape of the remaining liquid inside the capsule 1 until extraction of the capsule 1.

The blocking of the escape of the fluid is obtained thanks to the fact that the first (bottom) wall 3 of the capsule 1, upon completion of the flow of the pressurised fluid, tends to return to a non-deformed position moving away from the second portion 12b of the punch 12 remaining engaged only with the first apical portion 12a which defines a cap for closing the passage of the liquid.

The preset aims are achieved with a machine structured in this way thanks to a perforating unit structured in such a way as to open the capsule only in the presence of the pressurised liquid and thanks to the deformation of the capsule.

The particular geometry of the perforator allows:
- controlling in an optimum fashion the flow of the mixture, already formed inside the capsule, and
- blocking any dripping of the remains of the mixture of the product once the dispensing has been completed, thanks to the fact that the apical part of the perforator remains inside the capsule until it leaves the housing.

## Claims

1. A machine for preparing and extracting a hot beverage from a capsule (1) comprising a capsule body (2) forming a chamber delimited by a first closed wall (3) and a second open wall (4) on which is positioned, for closing, a sheet for sealing the chamber; a dose of product being housed inside said chamber; the machine (100) comprising:
- a load-bearing frame (6) having an inlet opening (7) for the capsule (1);
- a first fixed extraction unit (8) associated with the frame (6) and comprising a matching housing (9) for the capsule (1) and means (10) for perforating the capsule (1) and passage of the mixture, to obtain the extraction of the beverage;
- a second movable extraction unit (11), positioned inside the frame (6), and movable inside the frame (6) along a linear trajectory (T), in both directions, between a first non-operating end position away from the first fixed extraction unit (8), wherein the second movable extraction unit (11) can receive the capsule (2) through the inlet opening (7), and a second operating end position wherein the second movable extraction unit (11) is moved towards the first fixed extraction unit (8) in such a way as to move the capsule (1) from an inlet position to a position for insertion in the housing (9) of the first fixed unit (8) for extracting the liquid mixture by feeding a pressurised hot fluid inside the capsule (1);
**characterised in that** the means (10) for perforating and passage of the mixture comprise a perforating punch (12), positioned fixed at a bottom (9a) of the housing (9), and partly protruding from the bottom (9a); the punch (12) comprising:
- a first apical portion (12a) configured, in use, to intercept and perforate the first wall (3) of the capsule (1) upon a deformation of the first wall (3) of the capsule (1), by effect of the pressurised fluid, towards the bottom (9a) of the housing (9);
- a second base portion (12b) having a bridge-shaped cross-section defining an opening (13) passing towards a channel (14) or chamber, positioned below the punch (12), configured for the controlled falling of the liquid mixture coming out from the opening of the first wall (3) of the capsule (1) whilst the punch (12) is kept, that is, inserted, inside the capsule (1), the punch (12) having a triangular shape with rounded outer sides so as to define spreader elements and comprising two end arms (15, 16) fixing to the first fixed extraction unit (8), wherein between the two end arms (15, 16) is defined the opening (13) for the passage of the liquid mixture.

2. The machine according to claim 1, wherein the channel (14) has two semi-circular portions defined by the overlying punch (12) and configured to contain two lips (3a, 3b) of the first closed wall (3) of the capsule (1), defined by the incision of the punch (12), generated upon the deformation of the first closed wall (3) by effect of the pressurised fluid, and in such a way as to define a single controlled outlet point of the liquid mixture.

3. The machine according to claim 1 or 2, wherein the bottom (9a) of the housing (9) of the first fixed extraction unit (8) has a profile which is partly rounded and configured to allow a complementary coupling of the first wall (3) of the capsule (1) perforated by the punch (12) upon its deformation under the effect of the pressure of the fluid entering.

4. The machine according to any one of the preceding claims, wherein the punch (12) has a first apical portion (12a) having a triangular cross-section with a free vertex oriented away from the bottom (9a) of the housing (9) of the first fixed extraction unit (8).

5. The machine according to any one of the preceding claims, wherein the punch (12) has a triangular shape with rounded outer sides; the second base portion (12b) of the punch (12) having a smaller cross section than the cross section of the first apical portion (12a), and comprises two end arms (15, 16) fixing to the first fixed extraction unit (8) inside of which is defined the opening (13) for the passage of the liquid mixture.

6. The machine according to any one of the preceding claims, wherein the punch (12) is associated with and protruding from a supporting base (17) inserted in the first fixed extraction unit (8); on the supporting base (17) there being the channel (14) or chamber connected to a conduit (18) for passage of the liquid mixture towards a dispensing head (19).

7. The machine according to claim 6, wherein the supporting base (17) has the open channel (14) with a circular cross-section above which the punch (12) is positioned along a diametric directrix passing through the centre of the circular cross-section of the channel (14) and covering only a part of the channel (14).

8. The machine according to any one of the preceding claims, wherein the punch (12) is partly housed in a cylindrical cavity (9b) made in the bottom (9a) of the housing defining the upper part of the channel (14) or chamber.
